# EUROPEAN PATENT SPECIFICATION

(11) **EP 0 710 448 B1**
(45) Date of publication and mention of the grant of the patent: **04.04.2001**
(21) Application number: 95201663.2
(22) Date of filing: 20.06.1995
(51) Int. Cl.: A23L 1/164

(54) **A biscuit based on cereal flakes and a method for its manufacture**
Keks auf Basis von Getreideflocken, und Verfahren zu seiner Herstellung
Biscuit basé sur flocons de céréales et procédé pour sa fabrication

(30) Priority: 03.11.1994 IT MI942232
(43) Date of publication of application: 08.05.1996
(73) Proprietor: BARILLA ALIMENTARE S.P.A., 43100 Parma (IT)
(72) Inventor: Petronio, Michela, I-25122 Brescia (IT); Solzi, M. Luisa, I-43100 Parma (IT)
(74) Representative: Perani, Aurelio

(56) References cited:
- EP-A- 0 586 138
- WO-A-94/00025
- GB-A- 1 301 250
- US-A- 5 360 619

## Description

The present invention relates generally to the production of biscuits on an industrial scale.

More particularly, the present invention relates to a biscuit based on cereal flakes and to a commercial method for its manufacture.

The term biscuit is here intended to mean a sweet, solid, compact food product containing cereals and sugars but free from flour.

Products based on flaked cereals have been known for a long time and are widely used both as breakfast foods and as snacks.

There are basically two broad categories of cereal-based confectionery products: small blocks of compressed cereals and cereal bars.

Compressed cereal blocks are constituted by cereal flakes, generally wheat, which are very thin, baked and compressed as such, usually without the addition of binders. Just occasionally they also contain small quantities of expanded, extruded cereals (maize, rice, bran) or small pieces of dried fruit. Sometimes they may be covered in chocolate or like products.

Examples of such block products are given, for example, in UK Patent No. 1301250 and in EP-A-0 586 138.

The structure of such blocks is very light and friable and their taste is not particularly pronounced despite the possible addition of small quantities of sugar or honey (3-5%), malt (3-5%) and salt.

These blocks are immersed in a liquid, generally milk, and eaten with a spoon in a manner similar to ordinary toasted cereal flakes such as cornflakes.

By virtue of the absence of added fats and the exclusive use of natural ingredients, such blocks are very good foods from a dietetic and nutritional point of view.

These products are not, however, suitable for eating just as they are since they are too crumbly and have too little taste; because of their poor consistency they are very difficult to soak, particularly in hot drinks, without disintegrating.

The second category of products based on flaked cereals is that of cereal bars which can be eaten as they are, as snacks.

Cereal bars may in turn be divided into two sub-categories, that is, bars containing a sugar-based binder and bars containing a fat-based binder.

Bars containing a sugar-based binder have a consistency which varies from hard to soft and rubbery according to the type of sugar used.

For example, soft bars known by the English term "chewy granola bars" are prepared with the use of a low-boiling, aqueous solution of sugars, such as glucose, saccharose, invert sugar, fructose, honey, molasses etc, containing from 8-15% water. The cereal flakes and pieces of dried fruit, which constitute about 50% of the total weight of the bar, are mixed with the said solution to form a dough and heated to 105-120°C, often together with a certain quantity of fats (1-10%) and emulsifiers.

Bars containing a sugar binder and having a hard consistency are prepared with the use of high-boiling sugar solutions with a low moisture content (<8%) as the binder for forming the flakes and dried fruit into a dough, and are heated to about 135°C to give the final product a rather hard consistency when cold.

Finally, cereal bars containing a fat-based binder are prepared by forming cereal flakes into a dough with fats, generally vegetable fats, and adding other organoleptically characterising ingredients such as chocolate, sugars, almonds, hazelnut paste etc. According to the proportions of the ingredients used, the consistency of these bars may vary from very soft to hard. These bars generally contain various additives such as emulsifiers, hydrolysed proteins, modified starches, pectines, gelatines etc.

The cereal bars mentioned above, whatever category to which they belong, have a sugar or fat binder content of more than 40%; indeed, the binder is often the main ingredient of the bar.

For this reason, the cereal bars at present on the market, while sometimes having extremely good organoleptic properties and while being suitable for consumption as snacks, are not a satisfactory food from the nutritional point of view. Indeed, the high quantities of binders used means that the finished product consists of between 30% and 80% of simple sugars and 6-30% fat, which are values thought excessive by most dieticians.

The wide use of technological adjuvants and additives in the preparation of these cereal bars also does not find favour with nutritionists and dieticians.

There is therefore a very great need for a confectionery product based on cereal flakes which reconciles dietetic and nutritional requirements with those linked exclusively with gratification of taste.

The problem at the root of the present invention is thus how to provide a biscuit based on cereal flakes which avoids the problems of prior art products explained above.

More particularly, when compared with compressed cereal blocks, such biscuits must have better organoleptic properties so as to allow them to be eaten as snacks and better structural properties so as to enable them to be dipped in hot and cold drinks without being reduced to a pulp.

When compared with cereal bars, however, such biscuits must be able to be eaten as a meal, immersed or dipped in hot or cold drinks, and must at the same time have better organoleptic and nutritional properties.

This problem is solved according to the invention by a biscuit including from 36 to 91% of cereal flakes, characterised in that it contains between 7% and 28% by weight with respect to the total weight of the biscuit of a sugar binder and is free from added fats.

In a preferred embodiment of the invention, the biscuit may contain up to 40% by weight of pieces of fruit or vegetables with a moisture content of between 2 and 30% and up to 23.5% of extruded, expanded or puffed cereals with a moisture content of 2-7%, the percentages being by weight of the total weight of the biscuit.

The term extruded, expanded or puffed cereals is intended to mean food products obtained by the baking and extrusion of cereal-flour doughs such as are commonly used, inter alia, as breakfast foods for consumption immersed in hot or cold drinks (typically milk).

Sugar binders suitable for the invention are preferably constituted by solutions of edible saccharides (mono-, di-, tri-, oligo- and poly-saccharides), such as glucose, fructose, maltose, saccharose, syrups, honey, molasses, jams, malt extract possibly mixed together.

A binder which is particularly suitable for the purposes of the invention is honey.

Although any edible cereal may be used for the purposes of the invention, preferred examples of cereals which may constitute the flaked ingredients of the biscuit of the invention are wheat, maize, barley, oats, rice, millet and emmer.

The dimensions of the cereal flakes are preferably within the following percentage distributions:

| | | |
|---|---|---|
| discarded from screen | 4.5 mm | 0.3-5.1% |
| | 4.0 mm | 5.2-10.0% |
| | 2.5 mm | 50.9-69.8% |
| | 1.4 mm | 17.4-26.2% |
| | 0.56 mm | 6.1-8.5% |
| passed through screen | 0.56 mm | 3-5.4% |

Among the types of fruit and vegetables which may be used as ingredients of the biscuit of the invention may be mentioned, for example, apples, pears, prunes, apricots, grapes, peaches, cherries, bananas, coconut, carrot, hazelnuts, almonds, walnuts, peanuts, sesame seeds and linseed.

The preferred percentage distribution for the dimensions of the pieces of fruit is as follows:

| | | |
|---|---|---|
| discarded from screen | 3.350 mm | 0.3-5.4% |
| | 3.100 mm | 4.3-10.2% |
| | 2.800 mm | 18.7-28.7% |
| | 2.500 mm | 35.7-47.2% |
| | 2.000 mm | 16.8-23.9% |
| passed through screen | 2.000 mm | 9.6-12.3% |

The extruded, expanded or puffed cereals which may be used in the biscuits of the invention are based, for example, on maize, rice, barley, oats, wheat and bran.

A typical recipe for these extruded, expanded or puffed cereals is as follows:

| | |
|---|---|
| wheat flour | 0-20% |
| maize grits or flour | 0-100% |
| barley grits or flour | 0-15% |
| rice flour | 0-100% |
| sugar | 6-10% |
| salt | 0.5-1% |
| malt | 3-5% |

The dimensions of the extruded, expanded or puffed cereals are within the following percentage distribution:

| | | |
|---|---|---|
| discarded from screen | 4.000 mm | 0% |
| | 3.000 mm | 10.5% maximum |
| passed through screen | 2.000 mm | 15% maximum |

The biscuits according to the invention, as well as being free from added fats, are also free from food additives which makes them very sound from a nutritional point of view.

The small content of sugar binder also adds to the value of the biscuits of the invention from a dietetic point of view.

The extremely good dietetic-nutritional characteristics of the biscuit of the invention are accompanied by extremely good organoleptic properties and good properties of structural consistency, crispness and friability, which enable the biscuit to be eaten as it is, as a snack, dipped or immersed in drinks such as milk, tea, coffee etc whether cold or hot.

In addition, the biscuits of the invention easily lend themselves to being covered with chocolate, icings and other coverings in common use in the confectionery industry.

The present invention also relates to a method for the production of the cereal-flake biscuit described above. This method includes the successive steps of:
- moistening a mixture of ground cereals or grits or whole grains and baking the mixture to obtain a product with a 14-25% moisture content
- reducing the product to flakes, also with a moisture content of 14-25%
- mixing the flakes immediately after their formation with a sugar binder and possibly with water to obtain a dough having a moisture content of between 15 and 30%
- shaping the dough into biscuits by compression
- drying the biscuits to a moisture content of 2-5%.

To advantage the baking step mentioned above is carried out under pressure.

The sugar binder is preferably selected from the group comprising solutions of edible saccharides (mono-, di-, tri-, oligo- and poly-saccharides), such as glucose, fructose, maltose, saccharose, syrups, honey, molasses, jams, malt extract, possibly mixed together, and is preferably used in quantities varying from 8% to 28% by weight of the total weight of the dough.

A binder which is particularly suitable for use in the method of the invention is honey.

Before the step in which the biscuits are shaped, the method of the present invention preferably includes a step in which the flake-sugar dough is rested for a period of time up to 45 minutes. Obviously the length of the rest period, which is determined experimentally on the basis of wide-spread, uniform flake-binder contact, may be reduced gradually to nothing if the flake-binder mixing time is extended accordingly.

In a preferred embodiment of the invention, the method for the production of the cereal-flake biscuits includes the addition of pieces of fruit or vegetables with a moisture content of between 2 and 30%, and of extruded, expanded or puffed cereals having a moisture content of 2-7% in the mixing step.

The method for the production of cereal flake biscuits according to the invention is described in greater detail below with reference to the appended drawing, given purely by way of non-limitative example, in which:

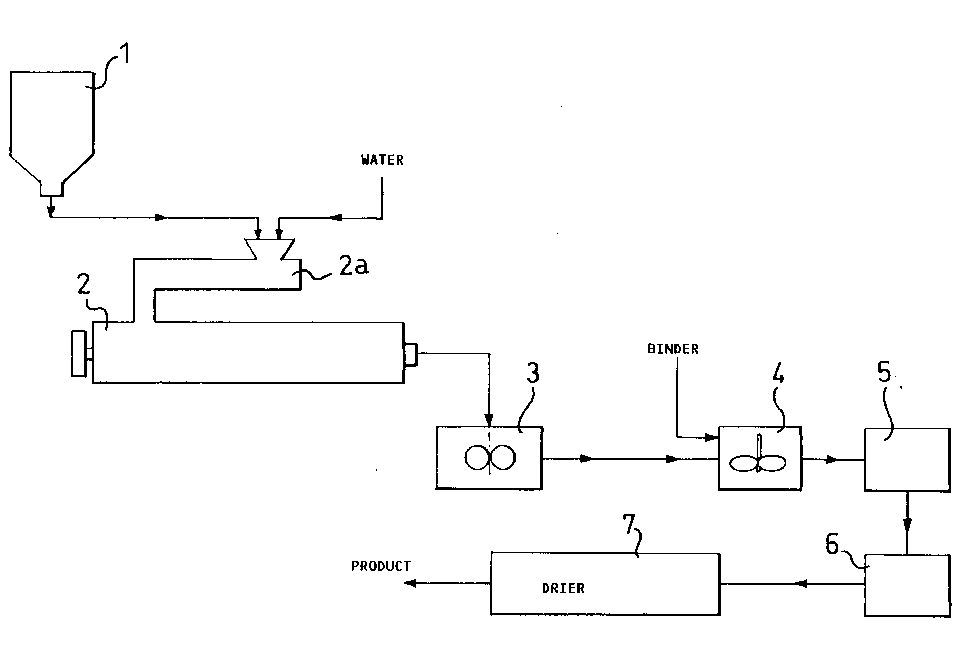

Figure 1 is a block-schematic diagram of apparatus for carrying out the method of the present invention.

Ground cereals or grits or whole grains of one or more types are transferred from a storage silo (1) to a conventional extruder-oven (2) after mixing with water in a mixer 2a. The extruded product, which has a moisture content of 14-25%, is delivered to flaking apparatus (3), also of conventional type, where it is converted into flakes having a thickness of 0.2-0.6 mm and a moisture content of 14-25%. The dimensions of the flakes are reduced so as to obtain the dimensional distribution indicated above as preferred by sieving and discarding the flakes which do not pass through a 4.5 mm mesh.

The flakes, which have a moisture content of 14-25%, are then delivered to a conventional mixer (4) into which a sugar binder is also fed. Other optional ingredients, such as pieces of fruit or vegetables and extruded, expanded or puffed cereals, may also be supplied to this mixer.

At the end of the mixing, which lasts for 5-45 minutes, the dough obtained is sent to a collection tank (5) and left to rest there for 5-45 minutes.

This resting step, although not essential to obtain the finished biscuit, allows the flakes to be wetted as fully as possible by the sugar binder, facilitating the subsequent shaping step and improving the structural characteristics of the finished biscuit.

It should also be noted that optimum wetting of the flakes by the sugar binder may be achieved with shorter rest periods than those indicated above as long as the flake-binder mixing step is prolonged accordingly.

After the rest period, the dough is supplied to shaping apparatus (6), where it is metered and compressed in suitable moulds to form the biscuits which are then dried in a tunnel drier (7) at a temperature of 100-200°C for a time sufficient to obtain biscuits with a moisture content of 2-5%.

Obviously any type of drier in current use in the food industry may effectively be used in the method of the invention instead of the tunnel drier (7).

Further characteristics and advantages of the present invention will become apparent from the examples provided below by way of non-limitative example. In the examples, all the quantities are expressed in parts or percentages by weight if not specified otherwise.

### EXAMPLE 1

70 parts of wheat flour and 30 parts of maize flour were moistened, baked and extruded in an extruder-oven of the type described above. The mixture, after subjection to mechanical action and heat (120°C) in this apparatus, was extruded in the form of vermicelli with a moisture content of 15%.

The extruded vermicelli were conveyed to flaking equipment in which they were converted into flakes with a thickness of 0.3+/-0.02 mm and a moisture content of 15%. The dimensions of the flakes were reduced and controlled by sieving through a sieve with a 4.5 mm mesh and flakes which did not pass the sieve were discarded.

The flakes, which still had a moisture content of 15%, were mixed for 5 minutes with honey and water in quantities such as to form a mixture of 8 parts honey and 92 parts flakes, with a moisture content of 16.5%, and were then left to rest for 15 minutes before being sent to the shaping step. From this latter step small blocks were obtained which were finally dried at a temperature of 120°C for 20 minutes to obtain the finished biscuits which had a moisture content of 3.5% and a content, in percentages by weight, of 7.7% honey and 88.8% maize and wheat flakes.

### EXAMPLE 2

36.6 parts of maize, oat and wheat flakes (in a percentage ratio 20:20:60) prepared as explained in the example above and having a moisture content of 23% were mixed for 5 minutes with 27.7 parts of syrup prepared from 35 parts of honey, 35 parts of fructose and 30 parts of glucose syrup with a high maltose content (DE 42-43), 8.7 parts of dried prunes (moisture content 8%), 5 parts of hazelnuts (moisture content 3%) and 22 parts of puffed rice (moisture content 2%) and a quantity of water such as to give a dough having a moisture content of 28%.

The dough obtained was left to rest for 15 minutes before being sent to the shaping step. From this latter step small blocks were obtained which finally were dried at a temperature of 150°C for 15 minutes to obtain the finished biscuits which had a moisture content of 3% and a content, in percentages by weight, of 33% maize, oat and wheat flakes, 23.8% syrup, 9.3% dried prunes, 5.6% hazelnuts and 25.3% puffed rice.

### EXAMPLE 3

50 parts of wheat and barley flakes (percentage ratio 80:20) prepared as described in Example 1 and both having a moisture content of 20% were mixed for 5 minutes with 20 parts of syrup prepared as in Example 2, 6 parts of dried apricots (moisture content 8%), 6 parts of dried apples (moisture content 20%), 5 parts of peanut pieces (moisture content 3%), 5 parts of almond pieces (moisture content 3%), 5 parts of dried pears (moisture content 20%) and 3 parts of rice crispies (moisture content 2%) and a quantity of water such as to give a dough having a moisture content of 25%.

The dough obtained was left to rest for 15 minutes and then sent to the shaping step where small blocks were obtained which finally were dried at a temperature of 180°C for 10 minutes to obtain the finished biscuits. These latter had a moisture content of 4% and contained, in percentages by weight, 37.6% wheat flakes, 9.4% barley flakes, 17.3% syrup, 6.5% dried apricots, 5.6% dried apples, 5.7% peanut pieces, 5.7% almond pieces, 4.7% dried pears and 3.5% rice crispies.

## Claims

1. A biscuit including from 36 to 91% of cereal flakes, between 7% and 28% by weight of a sugar binder based on the total weight of the biscuit, said biscuit being free from added fats characterised in that it further contains up to 40% by weight of pieces of fruit or vegetables, given as percentage by weight of the total weight of the biscuit, having a moisture content of between 2 and 30% and up to 23,5% of extruded, expanded or puffed cereals having a moisture content of between 2 and 7%.

2. A biscuit according to Claim 1 characterised in that the binder is selected from the group comprising solutions of edible saccharides (mono-, di-, tri-, oligo- and poly-saccharides), such as glucose, fructose, maltose, saccharose, syrups, honey, molasses, jams, malt extract, and their mixtures.

3. A biscuit according to Claim 2, characterised in that the cereal flakes are selected from the group comprising wheat, maize, barley, oats, rice, millet and emmer.

4. A biscuit according to Claim 2, characterised in that the binder is honey.

5. A biscuit according to Claim 2, characterised in that the fruit or vegetables are selected from the group comprising apples, pears, prunes, apricots, grapes, peaches, cherries, bananas, coconut, carrots, hazelnuts, almonds, walnuts, peanuts, sesame seeds and linseed.

6. A biscuit according to Claim 1, characterised in that the extruded, expanded or puffed cereals are based on one or more cereals selected from the group comprising wheat, maize, barley, oats and rice.

7. A biscuit according to any one of Claims 1 to 6, characterised in that it is free from food additives.

8. A method for the production of a biscuit according to any one of Claims 1 to 7, including the successive steps of:
- moistening a mixture of ground cereals or grits or whole grains and baking the mixture to obtain a product with a 14-25% moisture content
- reducing the product to flakes also having a moisture content of 14-25%
- mixing the flakes immediately after their formation with a sugar binder and possibly with water to obtain a dough having a moisture content of between 15 and 30%
- shaping the dough to form biscuits by compression
- drying the biscuits to a moisture content of 2-5%.

9. A method according to Claim 8, characterised in that the sugar binder is selected from the group comprising solutions of edible saccharides (mono-, di-, tri-, oligo-and poly-saccharides), such as glucose, fructose, maltose, saccharose, syrups, honey, molasses, jams, malt extract, possibly mixed together and used in quantities which may vary from 8%-28% by weight of the total weight of the dough.

10. A method according to Claim 9, characterised in that the binder is honey.

11. A method according to Claim 10, characterised in that it includes a step in which the dough resulting from the mixing is left to rest for 5-45 minutes before the shaping step.

12. A method according to any one of Claims 8-11, characterised in that it includes the addition, in the mixing step, of pieces of fruit or vegetables with a moisture content of between 2 and 30%, and/or of extruded, expanded or puffed cereals with a moisture content of 2-7%.

13. A cereal biscuit obtainable with the method according to any one of Claims 8-12.

## Patentansprüche

1. Keks mit 36 bis 91 % Cerealienflocken und zwischen 7 und 28 Gew.-% eines Zuckerbindemittels auf der Basis des gesamten Keksgewichts, wobei der Keks keine Fette zugesetzt enthält, dadurch gekennzeichnet, dass er, bezogen auf sein Gesamtgewicht, bis zu 40 Gew.-% an Frucht- oder Gemüsestücken eines Feuchtigkeitsgehalts zwischen 2 und 30 % und bis zu 23,5 % an extrudierten, expandierten oder gepufften Cerealien eines Feuchtigkeitsgehalts zwischen 2 und 7 % enthält.

2. Keks nach Anspruch 1, dadurch gekennzeichnet, dass das Bindemittel aus der Gruppe, umfassend Lösung essbarer Saccharide (Mono-, Di-, Tri-, Oligo- und Polysaccharide), wie Glucose, Fructose, Maltose, Saccharose, Sirupsorten, Honig, Melassesorten, Marmeladesorten, Malzextrakt und Mischungen hiervon, ausgewählt ist.

3. Keks nach Anspruch 2, dadurch gekennzeichnet, dass die Cerealienflocken aus der Gruppe Weizen, Mais, Gerste, Hafer, Reis, Hirse und Emmer ausgewählt sind.

4. Keks nach Anspruch 2, dadurch gekennzeichnet, dass das Bindemittel aus Honig besteht.

5. Keks nach Anspruch 2, dadurch gekennzeichnet, dass die Früchte oder Gemüse aus der Gruppe Äpfel, Birnen, Pflaumen, Aprikosen, Trauben, Pfirsiche, Kirschen, Bananen, Kokosnuss, Karotten, Haselnüssen, Mandeln, Walnüssen, Erdnüssen, Sesamsamen und Leinsamen ausgewählt sind.

6. Keks nach Anspruch 1, dadurch gekennzeichnet, dass die extrudierten, expandierten oder gepufften Cerealien auf einer oder mehreren Cerealie(n), ausgewählt aus der Gruppe Weizen, Mais, Gerste, Hafer und Reis, basieren.

7. Keks nach einem der Ansprüche 1 bis 6, dadurch gekennzeichnet, dass er frei von Nahrungsmittelzusätzen ist.

8. Verfahren zur Herstellung eines Kekses nach einem der Ansprüche 1 bis 7, umfassend die folgenden Stufen:
Anfeuchten eines Gemischs aus gemahlenen Cerealien oder Grobmehl oder Vollkorn und Backen des Gemischs zur Gewinnung eines Produkts eines Feuchtigkeitsgehalts von 14 bis 25 %;
Zerlegen des Produkts zu Flocken ebenfalls eines Feuchtigkeitsgehalts von 14 bis 25 %;
Vermischen der Flocken unmittelbar nach ihrer Bildung mit einem Zuckerbindemittel und möglicherweise mit Wasser zur Gewinnung eines Teigs eines Feuchtigkeitsgehalts zwischen 15 und 30 %;
Ausformen des Teigs zur Bildung von Keksen durch Verpressen, und
Trocknen der Kekse auf einen Feuchtigkeitsgehalt von 2 bis 5 %.

9. Verfahren nach Anspruch 8, dadurch gekennzeichnet, dass das Zuckerbindemittel aus der Gruppe, umfassend Lösungen essbarer Saccharide (Mono-, Di-, Tri-, Oligo- und Polysaccharide), wie Glucose, Fructose, Maltose, Saccharose, Sirupsorten, Honig, Melassesorten, Marmeladesorten und Malzextrakt, möglicherweise miteinander vermischt und in Mengen, die von 8 bis 28 Gew.-% des gesamten Teiggewichts variieren können, ausgewählt ist.

10. Verfahren nach Anspruch 9, dadurch gekennzeichnet, dass das Bindemittel aus Honig besteht.

11. Verfahren nach Anspruch 10, dadurch gekennzeichnet, dass in einer zusätzlichen Stufe der Teig aus dem Mischvorgang vor dem Ausformen 5 bis 45 min ruhen gelassen wird.

12. Verfahren nach einem der Ansprüche 8 bis 11, dadurch gekennzeichnet, dass zusätzlich in der Mischstufe Stücke von Früchten oder Gemüsen mit einem Feuchtigkeitsgehalt zwischen 2 und 30 % und/oder extrudierte, expandierte oder gepuffte Cerealien eines Feuchtigkeitsgehalts von 2 bis 7 % eingearbeitet werden.

13. Cerealienkeks, erhältlich nach dem Verfahren gemäß einem der Ansprüche 8 bis 12.

## Revendications

1. Biscuit contenant de 36 à 91 % de flocons de céréales, entre 7 % et 28 % d'un liant de sucre par rapport au poids total du biscuit, ledit biscuit étant exempt de graisses ajoutées, caractérisé en ce qu'il contient en outre jusqu'à 40 % en poids de morceaux de fruits ou de légumes, en pourcentage pondéral du poids total du biscuit, ayant une teneur en humidité comprise entre 2 et 30 % et jusqu'à 23,5 % de céréales extrudées, expansées ou soufflées, ayant une teneur en humidité comprise entre 2 et 7 %.

2. Biscuit selon la revendication 1, caractérisé en ce que le liant est sélectionné dans le groupe comprenant des solutions de saccharides comestibles (mono-, di-, tri-, oligo- et polysaccharides) tels que le glucose, le fructose, le maltose, le saccharose, des sirops, le miel, la mélasse, des confitures, un extrait de malt, et leurs mélanges.

3. Biscuit selon la revendication 2, caractérisé en ce que les flocons de céréales sont sélectionnés dans le groupe comprenant le blé, le maïs, l'orge, l'avoine, le riz, le millet et l'emmer.

4. Biscuit selon la revendication 2, caractérisé en ce que le liant est le miel.

5. Biscuit selon la revendication 2, caractérisé en ce que le fruit ou les légumes sont sélectionnés dans le groupe comprenant les pommes, les poires, les prunes, les abricots, les raisins, les pèches, les cerises, les bananes, la noix de coco, les carottes, les noisettes, les amandes, les noix, les arachides, les graines de sésame et les graines de lin.

6. Biscuit selon la revendication 1, caractérisé en ce que les céréales extrudées, expansées ou soufflées sont à base d'une ou plusieurs céréales sélectionnées dans le groupe comprenant le blé, le maïs, l'orge, l'avoine et le riz.

7. Biscuit selon l'une quelconque des revendications 1 à 6, caractérisé en ce qu'il est exempt d'additifs alimentaires.

8. Procédé de production d'un biscuit selon l'une quelconque des revendications 1 à 7, comprenant les étapes successives consistant à :
- humidifier un mélange de céréales broyées ou de son ou de grains entiers, et cuire le mélange pour obtenir un produit ayant une teneur en humidité de 14-25 %
- réduire le produit en flocons ayant également une teneur en humidité de 14-25 %
- mélanger les flocons immédiatement après leur formation à un liant de sucre et éventuellement à de l'eau pour obtenir une pâte ayant une teneur en humidité comprise entre 15 et 30 %
- façonner la pâte pour former des biscuits par compression
- sécher les biscuits jusqu'à une teneur en humidité de 2-5 %.

9. Procédé selon la revendication 8, caractérisé en ce que le liant de sucre est sélectionné dans le groupe comprenant des solutions de saccharides comestibles (mono-, di-, tri-, oligo- et polysaccharides), tels que le glucose, le fructose, le maltose, le saccharose, des sirops, le miel, la mélasse, des confitures, un extrait de malt, éventuellement mélangés les uns aux autres et utilisés dans des proportions qui peuvent varier de 8 % à 28 % en poids du poids total de la pâte.

10. Procédé selon la revendication 9, caractérisé en ce que le liant est le miel.

11. Procédé selon la revendication 10, caractérisé en ce qu'il comprend une étape lors de laquelle la pâte résultant du mélange est laissée à reposer pendant 5-45 minutes avant l'étape de façonnage.

12. Procédé selon l'une quelconque des revendications 8-11, caractérisé en ce qu'il comprend l'addition, lors de l'étape de mélange, de morceaux de fruits ou de légumes ayant une teneur en humidité comprise entre 2 et 30 %, et/ou de céréales extrudées, expansées ou soufflées ayant une teneur en humidité de 2-7 %.

13. Biscuit de céréales pouvant être obtenu par le procédé selon l'une quelconque des revendications 8-12.
